# FASCICULE DE BREVET EUROPEEN

(11) **EP 3 368 852 B1**
(45) Date de publication et mention de la délivrance du brevet: **06.11.2019**
(21) Numéro de dépôt: 16781420.1
(22) Date de dépôt: 12.10.2016
(51) Int. Cl.: F28D 20/02, F28D 20/00

(54) **DISPOSITIF DE STOCKAGE D'ÉNERGIE THERMIQUE PAR MATÉRIAU À CHANGEMENT DE PHASE SOLIDE/LIQUIDE COMPRENANT UN CONDENSEUR**
VORRICHTUNG ZUR WÄRMEENERGIESPEICHERUNG MITTELS EINER FEST-FLÜSSIG-SPEICHERSTOFFES MIT EINEM KONDENSATOR
DEVICE FOR STORING THERMAL ENERGY BY A SOLID-LIQUID PHASE-CHANGE MATERIAL COMPRISING A CONDENSER

(30) Priorité: 29.10.2015 FR 1560348
(43) Date de publication de la demande: 05.09.2018
(73) Titulaire: Commissariat à l'Energie Atomique et aux Energies Alternatives, 75015 Paris (FR)
(72) Inventeur: CARON, Adèle, 38000 Grenoble (FR); COUTURIER, Raphaël, 38360 Sassenage (FR); DOISEAU, Aude-Claire, 38000 Grenoble (FR)
(74) Mandataire: Brizio Delaporte, Allison
(86) Numéro de dépôt international: PCT/EP2016/074504
(87) Numéro de publication internationale: WO 2017/071959

(56) Documents cités:
- EP-A1- 2 623 913
- FR-A1- 3 013 453
- US-A1- 2011 083 436

## Description

### DOMAINE TECHNIQUE

La présente invention concerne un dispositif de stockage d'énergie thermique par matériau à changement de phase solide/liquide comprenant un condenseur selon le préambule de la revendication 1. US 2011/083436 divulgue un tel dispositif.

Le domaine de l'invention concerne les Systèmes de Stockage Thermiques (SST) par Matériaux à Changement de Phase (MCP).

L'invention concerne plus particulièrement l'intégration d'un système de stockage thermique dans des centrales solaires à concentration, par exemple pour des centrales à génération directe de vapeur, ou encore la valorisation de la chaleur fatale des industries.

### ETAT DE LA TECHNIQUE

Les systèmes de stockage thermique offrent de nombreux bénéfices pour la gestion des industries. Par exemple, dans les centrales solaires à concentration, il existe un écart temporel entre la ressource solaire disponible et la demande en énergie. Ce problème se pose pour toutes les unités de production de chaleur intermittente. Le développement de systèmes de stockage permet de différer l'utilisation de la production de chaleur en collectant la chaleur pendant les périodes de fortes irradiations solaires afin de la restituer plus tard durant les périodes de non-ensoleillement ou durant la nuit.

Dans l'industrie des procédés, les systèmes de stockage thermique sont un moyen de valoriser la chaleur fatale. Cette chaleur, issue des rejets thermiques industriels, est disponible à des niveaux de température entre 30 et 90 °C dans l'industrie agroalimentaire, papier-carton, chimie et même entre 200-500 °C pour les industries des métaux, verre et ciment. Cependant, dans la plupart des cas, les périodes de disponibilité diffèrent des périodes d'utilisation, et sans solution de stockage, toute l'énergie en excès, inutilisable au moment de sa production, est simplement jetée dans le milieu extérieur (à l'atmosphère sous forme d'effluents gazeux ou dans les circuits d'eau naturels sous forme d'effluents liquides). Avec un système de stockage, l'énergie produite en excès durant la journée pourrait être injectée sur un réseau urbain de chaleur au moment des pics de consommation, le matin et le soir. Le stockage de chaleur permettrait également de transporter cette énergie sur un autre site industriel qui aurait besoin d'un apport thermique.

Il existe différents types de stockage : sensible, latent et thermochimique.

Le stockage latent met en oeuvre des Matériaux à Changement de Phase (MCP) pour stocker la chaleur. Le stockage thermique est réalisé en utilisant l'enthalpie de changement d'état. C'est l'enthalpie de changement de phase, le plus souvent lors du changement d'état solide/liquide, qui est stockée. Cette énergie, qui est absorbée lors de la fusion et libérée lors de la solidification, résulte de l'établissement, ou de la rupture, de liaisons interatomiques ou intermoléculaires. La charge du système de stockage s'accompagne de la fusion du matériau de stockage, tandis que la décharge est réalisée par la solidification dudit matériau. Le matériau doit être judicieusement choisi en fonction de la température cible du système de stockage, afin que sa température de fusion soit dans la plage de température d'utilisation. Le changement de phase liquide-gazeux est bien plus intéressant énergétiquement parlant mais les difficultés de mise en oeuvre liées à la gestion de volumes importants de gaz sous pression et à haute température limitent leur développement.

La chaleur échangée est appelée enthalpie de changement de phase ou chaleur latente et la quantité d'énergie est de l'ordre de 200 J/g si bien qu'en utilisant de tels MCP solide-liquide, il est possible de réduire les volumes de stockage en comparaison aux stockages utilisant la chaleur sensible. De ce fait les quantités de matériaux sont réduits, ce qui diminue le prix du système, et limite les pertes thermiques qui sont proportionnelles à la surface extérieure du réservoir.

La densité énergétique peut ainsi être doublée par rapport aux systèmes sensibles. Elle est, en effet, de l'ordre de 40-60 kWh/m3 pour les systèmes de stockage sensible et de 90-120 kWh/m3 pour les systèmes de stockage latent. Un des avantages majeurs de cette technologie est que le changement de phase peut se faire à pression et température constantes. Par conséquent, la décharge de l'énergie stockée se fait à température constante.

Cependant, la faible conductivité thermique des MCP, de l'ordre de 0,2 W/(m.K) limite le transfert thermique au sein de ces matériaux. Les MCP sont alors insérés dans des cuves avec échangeurs à surface augmentée, tels que les tubes avec ailettes circulaires ou longitudinales pour maximiser le transfert thermique.

On connait notamment la technologie d'échangeur tube - calandre. Une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique cette technologie est adaptée, il n'y a plus échange entre deux fluides en mouvement, mais entre un fluide caloporteur qui circule dans les tubes et un MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de fusion du MCP et récupère l'énergie précédemment stockée, ce qui entraine la solidification du MCP.

Classiquement, les tubes sont entourés d'ailettes circulaires augmentant la surface d'échange thermique ou bien d'inserts de plus grandes dimensions permettant en plus de maintenir les tubes solidaires entre eux.

Pendant leur transition solide-liquide, les MCP connaissent une expansion volumique de l'ordre de 10% qui oblige à laisser une zone libre en haut des cuves de stockage afin de limiter les surpressions. Cette zone peut être balayée par un gaz inerte, comme de l'hélium ou de l'azote. La cuve peut aussi être équipée d'un vase d'expansion pour garantir une pression d'équilibre dans la cuve.

Par ailleurs, il a été observé que certains MCP sont sujets à l'évaporation lorsqu'ils sont en phase liquide au contact d'un ciel gazeux. Ceci est dû à leur tension de vapeur saturante qui peut être élevée aux températures de fonctionnement. Plus la tension de vapeur saturante est élevée, plus le MCP aura tendance à se vaporiser au contact avec un gaz.

Des tests de cyclage thermique ont été réalisés dans un four pour tester la stabilité thermique d'un MCP tel l'acide sébacique. Lorsque le produit est maintenu en phase liquide, il se vaporise sous l'effet de la ventilation du four. Une diminution de la masse voire une disparition totale de produit a pu être observée.

Il a également été constaté que l'acide sébacique se vaporise dans un appareil de caractérisation DSC (de l'anglais, Differential Scanning Calorimetry pour calorimétrie différentielle à balayage) avec balayage à l'azote ou au CO2. Le produit vaporisé se loge ensuite dans les circuits de balayage de l'appareil de caractérisation, il se condense puis se solidifie et endommage l'appareil.

Ainsi, dans une cuve de stockage, la présence d'un balayage en gaz renouvelle l'atmosphère dans la cuve de stockage et favorise l'évaporation continue du MCP. Une fois sous forme de vapeur et entraîné dans les canalisations du balayage et les différentes soupapes de la cuve, le MCP peut se condenser puis se solidifier au contact des zones froides, ce qui peut à terme boucher les canalisations du ciel gazeux, les encrasser ou les corroder. Par ailleurs, cette évaporation contribue à une perte de matériau, qui peut être notable lorsque les MCP présentent une tension de vapeur saturante assez élevée.

Enfin, lors d'essais de caractérisation DSC, il a également pu être noté que même en utilisant des cellules fermées, sans balayage de gaz, l'acide sébacique se vaporise et réussit à s'échapper de la cellule. Ainsi, dans une cuve de stockage, même en présence d'un ciel gazeux non balayé, le produit pourrait se vaporiser et s'infiltrer dans les filetages, jusqu'à endommager l'étanchéité des cuves.

Il existe donc le besoin de proposer un dispositif permettant de protéger les canalisations du circuit de balayage et l'étanchéité de la cuve.

### EXPOSE DE L'INVENTION

La présente invention propose à cet effet un dispositif de stockage d'énergie thermique comprenant une cuve recevant au moins un MCP diphasique solide-liquide et un échangeur d'énergie thermique à fluide caloporteur. L'échangeur comprend au moins un tube, au moins partiellement immergé dans le MCP et dans lequel est apte à circuler un fluide caloporteur configuré pour apporter et/ou récupérer de l'énergie thermique du MCP. Le dispositif comprend un ciel gazeux de gaz inerte au moins partiellement agencé au-dessus du MCP solide-liquide. De manière caractéristique, le dispositif comprend un moyen de séparation agencé dans le ciel gazeux et hors d'une zone maximale d'occupation du MCP dans sa phase la plus dilatée des deux phases solide-liquide, le moyen de séparation étant destiné à séparer du ciel gazeux une fraction du au moins un MCP solide/liquide s'évaporant lors des changements de phase.

Par cette disposition de l'invention, le moyen de séparation sépare le MCP solide-liquide qui se trouve à l'état gazeux dans le ciel gazeux d'avec le gaz du ciel gazeux. Cette séparation permet ainsi la récupération du MCP. Cette récupération évite la fuite non contrôlée du MCP solide-liquide dans des canalisations ou structures non étudiées pour.

De manière avantageuse, le moyen de séparation est un point froid ou une source froide notamment un condenseur. C'est-à-dire que le MCP solide-liquide à l'état gazeux se trouvant dans le ciel gazeux va se condenser par contact au condenseur tandis que le gaz du ciel gazeux reste à l'état gazeux. Le MCP solide-liquide condensé ne peut plus s'échapper de manière non contrôlée et risquer d'endommager le dispositif.

Avantageusement, le moyen de séparation est agencé dans la cuve permettant ainsi d'éviter toute fuite hors de la cuve et limite ainsi les risques d'encrassement des canalisations en sortie de la cuve.

Préférentiellement, le dispositif comprend un receveur de sorte à récupérer le MCP solide-liquide séparé du ciel gazeux qui a été avantageusement condensé.

Suivant un autre aspect, l'invention concerne un procédé de stockage d'énergie thermique dans un dispositif tel que décrit ci-dessus. Le procédé comprend les étapes de changements de phases du MCP, permettant avantageusement le stockage d'énergie thermique dans le dispositif, d'évaporation d'une fraction du MCP au cours de ces changements de phase et une étape de séparation de ladite fraction de MCP évaporée du gaz du ciel gazeux.

Avantageusement, ces trois étapes sont simultanées. C'est-à-dire qu'elles se déroulent sensiblement en même temps.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :
Figure 1 : Schéma de principe d'un dispositif de stockage de l'état de la technique.
Figure 2 : Schéma de principe d'un dispositif de stockage selon un premier mode de réalisation.
Figure 3 : Schéma de principe d'un dispositif de stockage selon le premier mode de réalisation pour un condensat liquide avec une possibilité de moyen de prélèvement.
Figure 4 : Dispositif de stockage selon le premier mode de réalisation pour un condensat solide.
Figure 5 : Schéma de principe d'un dispositif de stockage selon un deuxième mode de réalisation.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention concerne un dispositif de stockage d'énergie thermique comprenant une cuve, au moins un matériau à changement de phase (MCP) diphasique solide/liquide contenu dans la cuve et un échangeur d'énergie thermique à fluide caloporteur comprenant au moins un tube dans lequel est apte à circuler un fluide caloporteur configuré pour amener et/ou récupérer de l'énergie thermique au MCP, le tube étant au moins partiellement immergé dans le MCP et comprenant un ciel gazeux de gaz inerte comportant une partie agencée dans la cuve au-dessus et au contact du au moins un MCP caractérisé en ce qu'il comprend un moyen de séparation agencé dans le ciel gazeux hors d'une zone maximale d'occupation du MCP dans sa phase la plus dilatée des deux phases solide-liquide, le moyen de séparation étant configuré pour séparer du ciel gazeux une fraction du au moins un MCP solide/liquide s'évaporant lors des changements de phase.

Avantageusement, suivant des variantes préférées mais non limitatives pouvant être cumulatives ou alternatives, l'invention est telle que :
- le moyen de séparation comprend un condenseur.
- le condenseur est configuré pour condenser la fraction du MCP solide/liquide évaporé présent dans le ciel gazeux sans condenser le gaz du ciel gazeux.
- le condenseur est choisi parmi une colonne de Vigreux ou un tube traversant au moins partiellement le ciel gazeux et contenant un fluide frigorigène.
- le moyen de séparation comprend un receveur disposé sous le condenseur de sorte à récupérer la fraction du MCP solide /liquide condensé.
- le moyen de séparation est agencé dans le ciel gazeux contenu dans la cuve.
- le dispositif comprend des moyens de balayage du ciel gazeux comprenant au moins un conduit d'entrée de gaz de balayage dans la cuve et au moins un conduit de sortie de gaz de balayage hors de la cuve.
- le moyen de séparation est agencé au niveau du conduit de sortie de gaz de sorte à séparer le gaz du ciel gazeux de la fraction de MCP solide/liquide évaporé avant que le gaz du ciel gazeux soit emporté dans le conduit de sortie.
- le dispositif comprend un moyen de prélèvement de la fraction du MCP solide/liquide séparé par le moyen de séparation.
- le moyen de prélèvement est choisi parmi une vanne de prélèvement ou un accès au receveur depuis l'extérieur de la cuve.
- le dispositif ne comprend pas de MCP liquide/gaz.
- le gaz inerte du ciel gazeux et/ou un gaz de balayage est choisi parmi l'un au moins azote, hélium, dioxyde de carbone, argon, air, et mélange d'un ou plusieurs gaz précédent.

Suivant un autre aspect, l'invention concerne un procédé de stockage d'énergie thermique dans un dispositif selon l'une quelconque des revendications précédentes comprenant les étapes suivantes :
- changement de phase du MCP entre les phases liquide et solide
- évaporation d'une fraction de MCP au cours des changements de phase
- séparation de la fraction de MCP évaporé du gaz du ciel gazeux, préférentiellement par un moyen de séparation.

Avantageusement, la séparation de la fraction de MCP évaporé du gaz du ciel gazeux comprend la condensation de ladite fraction de MCP par un condenseur.

Avantageusement, le procédé comprend une étape de prélèvement de ladite fraction de MCP séparée par un receveur.

Avantageusement, le procédé comprend une étape de condensation de la fraction du MCP solide/liquide évaporé présent dans le ciel gazeux sans condenser le gaz du ciel gazeux, par l'intermédiaire du condensateur

Avantageusement, le procédé comprend une étape de séparation du gaz du ciel gazeux de la fraction de MCP solide/liquide gazéifié avant que le gaz du ciel gazeux soit emporté dans le conduit de sortie par l'intermédiaire du moyen de séparation, ledit moyen de séparation étant agencé au niveau du conduit de sortie de gaz.

Le dispositif selon l'invention comprend une cuve 1 de stockage destinée à contenir au moins un MCP 2 et un échangeur tel que décrit ci-après. Avantageusement, un fluide caloporteur circule dans l'échangeur traversant avantageusement ladite cuve 1.

Le MCP 2 est un MCP diphasique à transition solide/liquide. C'est-à-dire que le MCP 2 utilisé dans les conditions normales de l'invention est chosit pour avoir deux états ou deux phases : une phase solide et une phase liquide. Lors de changements de phase successifs au cours des cycles de charge et de décharge, une fraction du MCP 2 peut avoir tendance à s'évaporer. On entend par « s'évaporer » qu'une partie du MCP 2 contenu dans la cuve passe à l'état gazeux. S'évaporer s'entend comme synonyme de vaporiser ou gazéifier. L'évaporation du MCP se fait pendant les périodes des changements de phase du MCP, c'est-à-dire au cours des étapes de charge et de décharge d'énergie thermique dans le dispositif.

Le dispositif comprend un ciel gazeux 4. Un ciel gazeux est une zone du dispositif comprenant au moins un gaz. Avantageusement, le gaz est neutre ou inerte ou pour le moins compatible avec le MCP 2 contenu dans la cuve 1 et avantageusement également avec les matériaux de la cuve.

La cuve 1 comprend au moins partiellement le ciel gazeux 4. Le ciel gazeux 4 peut être présent en dehors de la cuve 1 au niveau d'un vase d'expansion ou de canalisation d'expansion. Préférentiellement, le ciel gazeux est entièrement contenu dans la cuve 1, plus précisément dans le volume intérieur de ladite cuve 1. Le ciel gazeux 4 est agencé au-dessus du MCP 2. Avantageusement, le gaz du ciel gazeux 4 est en contact avec le MCP 2 solide/liquide. Avantageusement, le ciel gazeux 4 complète le volume de la cuve 1. C'est-à-dire que la cuve comprend une zone supérieure libre de MCP 2 de sorte à permettre une expansion volumique du MCP 2 lors des changements de phase et éviter les surpressions. Classiquement, les MCP solide-liquide ont une variation volumique de l'ordre de 5 à 10% lors des changements de phase. Cette présence de gaz inerte ou neutre type azote ou hélium par exemple, avantageusement choisi suivant la réactivité du MCP employé permet également de prévenir certaines dégradations du solide pouvant intervenir au contact d'une atmosphère non inerte, typiquement de l'air, du CO₂...

Lorsqu'une fraction du MCP 2 passe à l'état gazeux, il se mélange au gaz du ciel gazeux 4.

De manière caractéristique, le dispositif comprend un moyen de séparation du ciel gazeux d'au moins une fraction du MCP 2 qui s'est vaporisée lors des changements de phase. Le MCP 2 est ainsi séparé du ciel gazeux 4 qui reste alors constitué de gaz inerte. Au moins une partie de la fraction du MCP 2 à l'état gazeux est séparée du gaz du ciel gazeux 4, préférentiellement, la totalité de la fraction du MCP 2 à l'état gazeux est séparée. L'étape de séparation est avantageusement continue et en parallèle des étapes de charge et décharge du dispositif, c'est-à-dire des changements de phase du MCP 2. Les étapes de changements de phase, d'évaporation pouvant avoir lieu au cours des étapes de changements phase et de séparation se déroulent sensiblement dans un même temps. Elles sont simultanées.

Selon l'invention, le moyen de séparation est agencé dans le ciel gazeux 4. Ainsi, le moyen de séparation peut être disposé hors de la cuve 1, par exemple dans une canalisation de sortie de gaz du ciel gazeux ou dans un vase d'expansion. Préférentiellement, le moyen de séparation est agencé dans la cuve 1, avantageusement au-dessus du MCP 2 dans le ciel gazeux 4. Préférentiellement, le moyen de séparation est disposé au-dessus du niveau le plus haut atteint par le MCP 2 dans sa phase la plus dilatée des deux phases solide-liquide, classiquement la phase liquide, soit dit différemment, le moyen de séparation est agencé hors d'une zone maximale d'occupation du MCP 2 dans sa phase la plus dilatée des deux phases solide-liquide, classiquement la phase liquide. La zone d'occupation maximale du MCP2 dans la cuve 1 est définie par le volume de la cuve 1 occupé par le MCP 2 dans sa phase la plus dilatée des deux phases solide-liquide, classiquement la phase liquide, dans les conditions classiques de fonctionnement du dispositif.

Selon un mode de réalisation préféré, le moyen de séparation est un point froid ou source froide. Plus précisément, le moyen de séparation est un condenseur 8.

On entend par point froid ou source froide, une zone plus froide que la température de condensation, voire de la température de fusion du MCP 2. Le condenseur 8 est configuré pour assurer la condensation de la fraction du MCP 2 présent dans le ciel gazeux 4 à l'état gazeux. Le condenseur 8 est également avantageusement configuré pour maintenir le gaz du ciel gazeux 4 à l'état gazeux. Le condenseur 8 n'a pas d'effet sur le gaz du ciel gazeux 4.

Le condenseur 8 est un point froid encore appelé point de condensation. On entend par là que le condenseur 8 est une zone plus froide que la température de condensation, voire de la température de fusion du MCP 2.

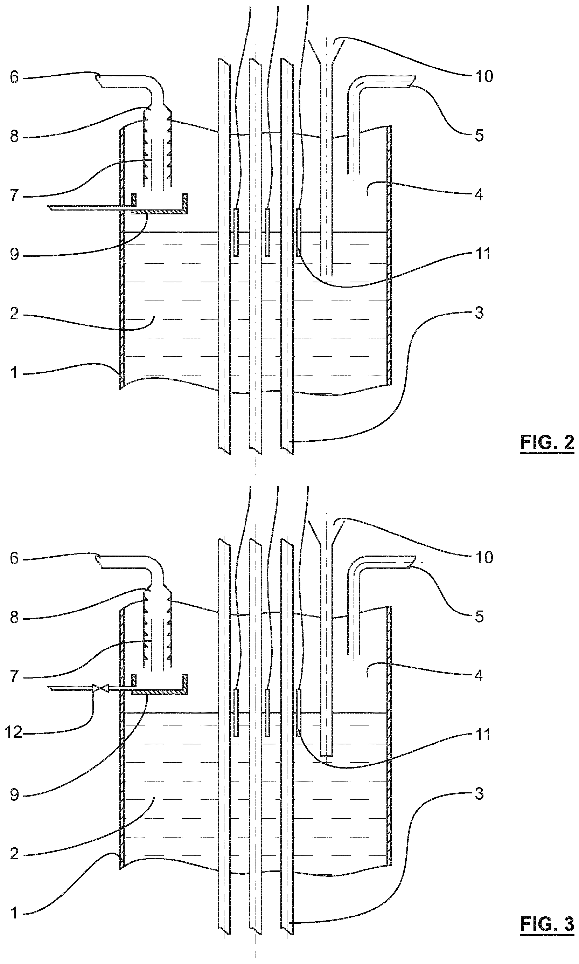

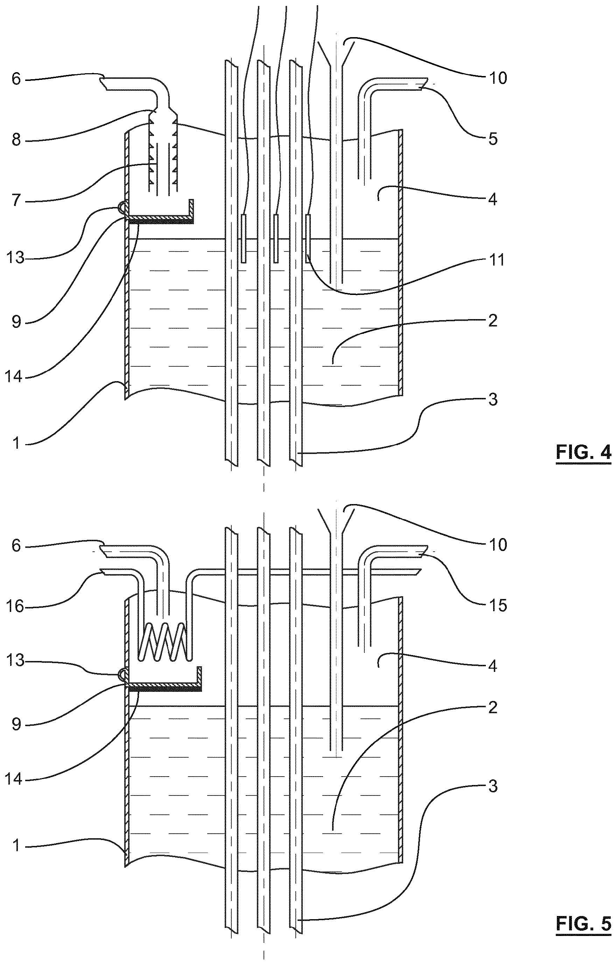

Le condenseur 8 peut être de différents types, par exemple une colonne de Vigreux tel qu'illustré en figures 2 à 4 ou bien un échangeur à fluide frigorigène tel qu'illustré en figure 5 ou bien encore une plaque de condensation c'est-à-dire une plaque en métal, préférentiellement en cuivre, avec des tubes caloporteurs à l'intérieur et dans lesquels circule le fluide frigorigène.

La fraction du MCP 2 à l'état gazeux se condensant sur le condenseur 8 est selon une possibilité réintroduit dans la cuve 1 soit directement par gravité en tombant du condenseur 8, soit par des moyens de réinjection depuis le condenseur 8, soit à partir du receveur décrit ci-après.

Selon une possibilité préférée, le dispositif comprend un des moyens de balayage du ciel gazeux. Préférentiellement, le balayage gazeux est assuré par deux canalisations, une en entrée 5 qui permet d'introduire dans la cuve un flux gazeux contrôlé, et une autre en sortie 6, permettant l'évacuation de la surpression. Des capteurs de pression, non représentés sur les figures, ainsi que des thermocouples 11 permettent éventuellement de suivre l'évolution en pression et température du dispositif. Des soupapes de sécurité sont également avantageusement connectées à la cuve 1 dans le cas d'une surpression due à un dysfonctionnement d'un dispositif de régulation.

Le balayage de gaz peut être réalisé avec n'importe quel gaz vecteur disponible, du moment que sa réactivité avec le MCP 2 ne soit pas avérée pour ne pas dégrader le matériau. Il conviendra ainsi d'éviter de mettre en présence l'érythritol chaud et l'oxygène, par exemple. Préférentiellement, le gaz de balayage est identique au gaz du ciel gazeux 4.

Le dispositif peut éventuellement comprendre un vase d'expansion de sorte à permettre l'évacuation hors de la cuve 1 du ciel gazeux et éventuellement du MCP 2 en surexpansion volumique.

Avantageusement, le condenseur 8 est agencé au niveau de l'entrée de la canalisation de sortie 6 de gaz de balayage de sorte à éviter l'encrassement des moyens de balayage et plus précisément, d'éviter que la fraction du MCP 2 à l'état gazeux ne s'échappe de la cuve 1 dans le cas où le condenseur 8 est agencé dans le volume de la cuve 1 et éventuellement se liquéfie voire même se solidifie dans les canalisations de balayage.

Le dispositif selon l'invention permet notamment une diminution notable, voire totale de la perte en MCP due à son évaporation.

Selon une possibilité avantageuse, le moyen de séparation comprend un receveur configuré pour récupérer le MCP 2 condensé. Le MCP 2 condensé par le condenseur est classiquement dénommé condensat. Avantageusement, le receveur est disposé en dessous du condenseur 8 de sorte que le condensat tombe par gravité dans le receveur. Le condensat n'est constitué que de la fraction de MCP vaporisée puis recondensée, le ciel gazeux étant choisi pour ne pas se condenser dans les conditions de travail. La fraction du MCP vaporisée puis condensée peut comprendre des impuretés comme expliqué ci-après.

Le receveur peut être de différents types tels que par exemple une coupelle 9 telle qu'illustrée sur les figures 2 à 5.

Selon un mode de réalisation, le dispositif comprend un moyen de prélèvement du condensat. Le moyen de prélèvement permet de procéder à des prélèvements du condensat pendant les cycles de charge et/ou décharge. Ces prélèvements permettent notamment de vérifier l'état du MCP au cours du temps.

De manière additionnelle, le dispositif selon l'invention permet la purification du MCP 2. En effet, des cycles de charge - décharge permettant une évaporation - condensation des impuretés contenues dans le MCP 2 mènent à la récupération et l'extraction de ces impuretés de la cuve, et donc la purification du MCP. Le moyen de prélèvement permet alors leur retrait hors de la cuve 1.

Le moyen de prélèvement est adapté au type de MCP utilisé dans le dispositif et notamment à l'état dans lequel il est récupéré par le receveur après sa condensation par le condenseur. Ainsi, un MCP qui sera sous forme liquide dans le receveur après condensation pourra être prélevé par une canalisation de type tube muni d'une vanne de prélèvement tel qu'illustré à la figure 3. A contrario, pour un MCP qui sera sous forme solide dans le receveur après condensation pourra être prélevé par retrait du receveur hors de la cuve 1 ou par un accès au receveur depuis l'extérieur de la cuve 1 tel qu'illustré aux figures 4 ou 5.

A titre d'exemple, l'acide sébacique n'est pur qu'à 98%, les impuretés ont une température d'évaporation inférieure à celle de l'acide sébacique, elles seront retirées grâce au dispositif selon l'invention.

Le dispositif selon l'invention permet avantageusement grâce à l'invention et plus particulièrement au moyen de prélèvement d'effectuer une étude temporelle de la structure/formulation du MCP. Ceci présente un avantage notable pour : les procédés industriels permettant de contrôler la durée de vie du MCP, en contrôlant le taux de dégradation du matériau, et ainsi optimiser la qualité du procédé et améliore la maintenance ou pour un prototype à l'échelle du laboratoire ou pilote permettant de suivre l'évolution temporelle de la structure du MCP et ainsi déterminer sa durée de vie. Cela permet également de déterminer les éventuelles causes de la diminution du rendement du procédé, due à une dégradation du produit, une réaction secondaire...

La cuve 1 contient au moins un MCP. Le MCP est un MCP exploité pour son changement de phase solide-liquide. Le dispositif n'utilise préférentiellement pas de MCP liquide-gaz. Il peut être utilisé des mélanges de MCP. Dans la suite de la description, la référence à un MCP n'est pas limitative. L'invention est adaptée à une vaste variété de MCP et donc à une large gamme de température de stockage. Les deux grandes catégories de MCP pouvant être utilisées sont les organiques (paraffine, acide gras, alcool,...) et les inorganiques (hydrates de sel, alliages métalliques,...). Pour les réseaux de chaleur à eau surchauffée (-180°C) le MCP utilisé aura une température de fusion de l'ordre de 100-120°C, par exemple : de l'érythritol, de l'acide sébacique, une paraffine,... Il est préféré de cibler un matériau qui ne s'oxyde pas et qui n'oxyde pas la structure métallique de l'échangeur ou de la cuve 1, qui ait une bonne enthalpie massique de changement de phase et qui ne soit pas toxique. De préférence, le MCP 2 aura une bonne capacité calorifique et une conductivité thermique la plus élevée possible.

Un des MCP pouvant être utilisé dans les centrales solaires à génération directe de vapeur est le nitrate de sodium (NaNO₃) dont la température de fusion est de 306 °C. Son expansion volumique est de l'ordre de 7% obligeant à laisser un ciel gazeux en haut de la cuve de stockage. Ce matériau étant soumis à la dégradation, un balayage en air sec est mis en place en haut de la cuve de stockage afin de limiter le contact entre le sel et l'humidité.

Pour la valorisation de la chaleur fatale, des MCP ayant une température de fusion comprise entre 100 et 200 °C sont utilisés. On recense par exemple :
- Un acide dicarboxylique comme l'acide sébacique dont la température de fusion est d'environ 132 °C et la chaleur latente d'environ 200 J/g.
- Un alcool de sucre comme l'érythritol dont la température de fusion est de l'ordre de = 118 °C et qui possède une chaleur latente assez élevée, d'environ 340 J/g.

Le MCP 2 est un matériau à deux phases préférentiellement solide et liquide dont le passage entre ces deux phases stocke ou libère de l'énergie. Préférentiellement, le passage d'une première phase à une deuxième phase va nécessiter de la chaleur qui est donc stockée dans le MCP dans sa deuxième phase. A contrario, le passage de la deuxième phase à la première phase est exothermique et libère la chaleur stockée.

La cuve 1 est classiquement d'une forme cylindrique dont les parois sont formées de matériau métallique résistant aux variations de pression et de température. A titre d'exemple, la cuve 1 est en acier de construction au carbone. Les nuances classiques pour une cuve sous pression sont P235GH, P265GH, P355GH. En l'absence de pression, des aciers inoxydables 304, 316 peuvent être utilisés. La cuve 1 peut être réalisée en une seule pièce, en deux demi-cylindres soudés, ou encore par superposition de viroles.

La cuve 1 définit par ses parois un volume intérieur. La cuve 1 est avantageusement fermée, c'est-à-dire qu'elle comprend une paroi supérieure, encore appelée couvercle. La cuve 1 est avantageusement étanche aux fluides hormis les canalisations d'entrée et de sortie spécifiquement prévues.

La distribution_hydraulique dans chaque tube de l'échangeur peut se faire via une pieuvre, une plaque tubulaire, une boîte à eau, un divergent conique,...

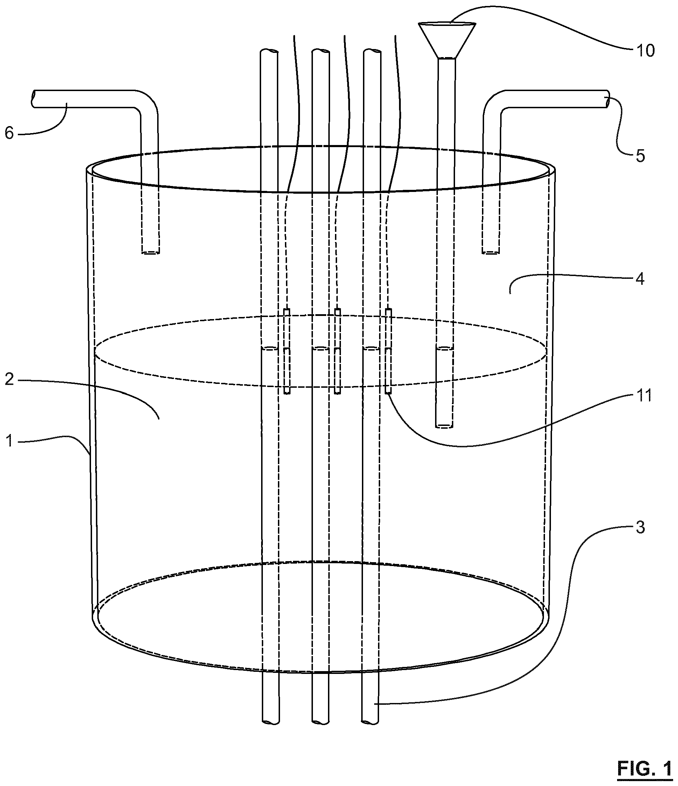

Le MCP 2 est placé directement dans la cuve 1 et l'échangeur plonge dans ledit MCP. Le MCP 2 est par exemple introduit dans la cuve 1 à l'état liquide par un conduit de remplissage 10 illustré à titre indicatif sur les figures 1 à 5. Le fluide caloporteur est classiquement de l'eau mais tout autre fluide présentant des propriétés caloporteuses peut être utilisé par exemple une huile thermique telle que le polychlorobiphényle (therminol®) ou un mélange d'isomères de (di)benzyltoluène (Jarytherm®)

Le dispositif peut comprendre une pluralité d'échangeurs agencés dans la cuve 1.

Selon un mode de réalisation préféré, la cuve 1 comprend des parois intérieures classiquement métalliques. Les parois sont préférentiellement recouvertes d'un matériau de revêtement destiné à éviter le contact entre le au moins un MCP 2 et des parties métalliques. A titre d'exemple le matériau de revêtement est un polymère ou une résine, préférentiellement un matériau de type résine fluorée tel du PTFE, FEP ou PFA. Cette disposition améliore les capacités de stockage du MCP en limitant l'oxydation du MCP lors des cycles de stockage au contact de l'oxygène et/ou du métal. Avantageusement, cette disposition peut également être utile pour éviter la corrosion de la cuve par le MCP si celui-ci est corrosif.

Lorsque le dispositif de stockage d'énergie fonctionne pour stocker de l'énergie thermique, l'échangeur apporte de la chaleur dans la cuve 1, il y a un échange de chaleur du fluide caloporteur vers le MCP 2 au travers de l'échangeur. Cette chaleur va permettre la transformation du MCP 2 de la première phase à la deuxième phase qui stockera alors la chaleur issue du fluide caloporteur. Lorsque le dispositif fonctionne pour restituer de l'énergie thermique, l'échangeur refroidit le MCP 2, il y a un échange de chaleur du MCP 2 vers le fluide caloporteur au travers de l'échangeur, ce qui permet le passage de la deuxième phase à la première phase. Cette transformation est exothermique. La chaleur libérée est récupérée par le fluide caloporteur.

A savoir, dans les dispositifs de stockage thermique par MCP, la puissance disponible est directement fonction de la surface d'échange et de l'agencement de l'échangeur dans la cuve 1. Ce qui permet d'optimiser la charge et la décharge du dispositif de stockage et d'adapter le système en fonction de son utilisation ; optimisant ainsi le rendement global de l'installation.

L'échangeur comprend au moins un tube et avantageusement un faisceau de tubes. Les tubes 3 peuvent être de n'importe quelle section, avec une préférence marquée pour les tubes 3 à section circulaire qui sont les plus simples à concevoir et qui résistent le mieux à la pression. La disposition des tubes 3 peut également varier, ils peuvent être en carré, en triangle,...

Les tubes 3 peuvent être en acier, les nuances classiques pour une paroi sous pression sont P235GH, P265GH, P355GH ; en l'absence de pression, les aciers inoxydables 304, 316 peuvent être utilisés, en aluminium, en cuivre, ou en autre métal ou alliage. Avec une préférence pour l'acier ayant un faible coût, qui est solide et résistant à la pression et l'aluminium, facile à travailler, bon conducteur thermique.

Aux Figures 2 à 4, le moyen de séparation selon l'invention est représenté, ainsi qu'un moyen de prélèvement. Le mélange gazeux constitué du gaz du ciel gazeux 4, éventuellement du gaz de balayage introduit dans la cuve 1 par l'entrée de gaz 5, et de l'éventuelle fraction de MCP 2 solide -liquide gazeux qui s'est vaporisée, s'introduit dans une canalisation 7, avantageusement placée dans un tube de condensation. Le mélange en montant dans la canalisation 7 puis dans le tube de condensation, par exemple du type colonne de Vigreux, se condense en partie. La colonne de Vigreux comporte des pics de forme conique répartis uniformément sur la surface interne de la colonne. Au contact de ces pics de Vigreux froids et de la colonne froide, les vapeurs ascendantes se condensent. En pratique, les pics permettent d'augmenter la surface d'échange froide de la colonne et ainsi de diminuer la hauteur de celle-ci. En se condensant, le MCP forme des gouttelettes qui vont retomber dans la cuve ou le système de prélèvement 9 sans être de nouveau en contact avec les vapeurs ascendantes dans le tube 7, ce qui les re-vaporiserait. Le MCP 2 alors sous forme liquide redescend par gravité dans la cuve 1. Ce moyen de séparation est choisi préférentiellement pour un MCP dont l'écart entre température de fusion et d'évaporation est assez grand pour éviter qu'il ne se solidifie dans le tube de condensation 7. Suivant la température de liquéfaction/solidification du MCP 2 ou des éventuels produits secondaires issus des cycles de changement de phase du MCP 2, le tube de condensation peut-être un simple tube sans les pics de Vigreux.

Le dimensionnement du tube de condensation doit être fait en fonction de la température de fusion du MCP 2. Le tube de condensation doit être d'autant plus petit que les températures d'ébullition et de fusion du MCP 2 pur sont proches.

Le moyen de prélèvement représenté à la figure 2 est une coupelle 9 fixée à l'intérieur de la cuve 1 et rajoutée avantageusement en dessous de la sortie 6 du tube de balayage de gaz, afin de récolter la partie liquide, le condensat de la fraction de MCP 2 qui s'est vaporisée puis qui s'est condensée sur les parois du tube de condensation. La coupelle 9 peut être composée d'un support fixe relié à la cuve 1 par une tige métallique par exemple et d'une coupelle proprement dite, amovible, permettant lors d'un changement d'état (phase/décharge) ou lors de l'ouverture de la cuve, de récupérer cette partie récoltée.

Le condensat récupéré peut être sous forme liquide ou solide, tant qu'il ne s'est pas solidifié dans la colonne de Vigreux entraînant un encrassement de celle-ci.

Dans le cas où le condensat est sous forme liquide, un système comprenant une vanne de prélèvement est également représenté en figure 3. La coupelle 9, préférentiellement non amovible dans ce cas-là, est reliée à la cuve 1 par un tube, par exemple de type tube en inox 1/8. Préférentiellement, le prélèvement est réalisé en fermant les canalisations de balayage gazeux, et en mettant légèrement en surpression la cuve 1. Une vanne 12 connectée à la coupelle 9 permet ainsi de récolter le liquide recueilli.

La figure 4 représente le dispositif selon l'invention dans le cas où le condensat se solidifie une fois dans la coupelle 9, notamment dû à une température de fusion assez basse. Une plaque 14 est prévue pour poser la coupelle 9. La coupelle 9 possède une poignée 13 grâce à laquelle, la coupelle 9 peut être retirée de la cuve 1. La cuve 1 comprend avantageusement un accès sur sa paroi latérale au regard de la poignée 13. Par exemple une trappe peut être aménagée. Avantageusement, la plaque 14 est solidaire de la cuve 1 et la coupelle 9 assure l'étanchéité de la cuve 1 une fois celle-ci mise en place sur la plaque 14, que ce soit en pression ou en température. Afin de récupérer le condensat solide, la coupelle 9 est retirée de la cuve 1, préférentiellement raclée et nettoyée et remise en place aussitôt. Le balayage de gaz est prévu pour ne pas modifier la composition du ciel gazeux, à condition que le remplacement de la coupelle 9 se fasse rapidement. Plusieurs coupelles 9 sont ainsi prévues à cet effet.

Dans le cas où le MCP 2 gazéifié se solidifierait directement sur les parois de la colonne, i.e. que les températures de fusion et d'ébullition du MCP sont trop proches, un dispositif permettant d'enlever la colonne régulièrement, afin que son fonctionnement ne soit pas perturbé et que le condensat puisse être récupéré peut être prévu.

Un autre moyen de séparation est illustré à la figure 5, permettant également un prélèvement du condensat, qu'il soit sous forme solide ou liquide. Le dispositif comprend un tube agencé dans le ciel gazeux 4. Le tube est configuré pour recevoir un fluide frigorigène, introduit dans le tube prévu à cet effet par l'entrée 15 et ressort par la sortie 16. La présence de ce tube froid dans la cuve 1 permet de condenser les vapeurs qui se sont éventuellement formées lors du changement de phase, MCP 2 ou impuretés. La température du fluide frigorigène doit être choisie de sorte que la phase vapeur à condenser ne se solidifie par sur le tube, provoquant ainsi son encrassement.

La phase vapeur qui se condense au contact du tube de fluide frigorigène tombe soit dans directement dans la cuve 1, soit tel que représenté dans la coupelle 9 prévue à cet effet et idéalement placée sous l'ensemble du tube ; le condensat ne retombe pas dans la cuve 1. La coupelle 9 peut être facilement retirée de la cuve 1 grâce à une poignée 13, ce qui permet de récupérer le condensat - sous forme liquide ou solide - et éventuellement de l'analyser.

### REFERENCES

- 1.: Cuve
- 2.: MCP
- 3.: Tube de fluide caloporteur
- 4.: Ciel gazeux
- 5.: Entrée de gaz de balayage
- 6.: Sortie de gaz de balayage
- 7.: Canalisation sortie de gaz
- 8.: Condenseur
- 9.: Coupelle de prélèvement
- 10.: Tube de remplissage
- 11.: Thermocouples
- 12.: Vanne de prélèvement
- 13.: Poignée
- 14.: Plaque
- 15.: Entrée fluide frigorigène
- 16.: Sortie fluide frigorigène

## Revendications

1. Dispositif de stockage d'énergie thermique comprenant une cuve (1), au moins un matériau à changement de phase (MCP) (2) diphasique solide/liquide contenu dans la cuve (1) et un échangeur d'énergie thermique à fluide caloporteur comprenant au moins un tube (3) dans lequel est apte à circuler un fluide caloporteur configuré pour amener et/ou récupérer de l'énergie thermique au MCP (2), le tube (3) étant au moins partiellement immergé dans le MCP (2) et comprenant un ciel gazeux (4) de gaz inerte comportant une partie agencée dans la cuve (1) au-dessus et au contact du au moins un MCP (2) **caractérisé en ce qu'**il comprend un moyen de séparation agencé dans le ciel gazeux (4) hors d'une zone maximale d'occupation du MCP (2) dans sa phase la plus dilatée des deux phases solide-liquide, le moyen de séparation étant configuré pour séparer du ciel gazeux (4) une fraction du au moins un MCP (2) solide/liquide s'évaporant lors des changements de phase.

2. Dispositif selon la revendication précédente dans lequel le moyen de séparation comprend un condenseur (8).

3. Dispositif selon la revendication 2 dans lequel le condenseur (8) est choisi parmi une colonne de Vigreux ou un tube traversant au moins partiellement le ciel gazeux (4) et contenant un fluide frigorigène.

4. Dispositif selon l'une quelconque des revendications 2 ou 3 dans lequel le moyen de séparation comprend un receveur disposé sous le condenseur (8) de sorte à récupérer la fraction du MCP (2) solide /liquide condensé.

5. Dispositif selon l'une quelconque des revendications précédentes comprenant des moyens de balayage du ciel gazeux (4) comprenant au moins un conduit d'entrée (5) de gaz de balayage dans la cuve (1) et au moins un conduit de sortie (6) de gaz de balayage hors de la cuve (1).

6. Dispositif selon l'une quelconque des revendications précédentes comprenant un moyen de prélèvement de la fraction du MCP (2) solide/liquide séparé par le moyen de séparation.

7. Dispositif selon la revendication précédente en combinaison avec la revendication 4 dans lequel le moyen de prélèvement est choisi parmi une vanne de prélèvement (12) ou un accès au receveur depuis l'extérieur de la cuve (1).

8. Dispositif selon l'une quelconque des revendications précédentes ne comprenant pas de MCP (2) liquide/gaz.

9. Dispositif selon l'une quelconque des revendications précédentes dans lequel le gaz inerte du ciel gazeux (4) et/ou un gaz de balayage est choisi parmi l'un au moins azote, hélium, dioxyde de carbone, argon, air, et mélange d'un ou plusieurs gaz précédent.

10. Procédé de stockage d'énergie thermique dans un dispositif selon l'une quelconque des revendications précédentes comprenant les étapes suivantes :
- changement de phase du MCP (2) entre les phases liquide et solide
- évaporation d'une fraction de MCP (2) au cours des changements de phase
- séparation de la fraction de MCP (2) évaporé du gaz du ciel gazeux (4) par un moyen de séparation.

11. Procédé selon la revendication précédente dans lequel la séparation de la fraction de MCP (2) évaporé du gaz du ciel gazeux (4) comprend la condensation de ladite fraction de MCP (2) par un condenseur (8).

12. Procédé selon la revendication précédente comprenant une étape de condensation de la fraction du MCP (2) solide/liquide évaporé présent dans le ciel gazeux (4) sans condenser le gaz du ciel gazeux (4), par l'intermédiaire du condensateur 8.

13. Procédé selon l'une quelconque des trois revendications précédentes comprenant une étape de séparation du gaz du ciel gazeux (4) de la fraction de MCP (2) solide/liquide gazéifié avant que le gaz du ciel gazeux (4) soit emporté dans le conduit de sortie (6) par l'intermédiaire du moyen de séparation, ledit moyen de séparation étant agencé au niveau du conduit de sortie (6) de gaz.

14. Procédé selon l'une quelconque des quatre revendications précédentes comprenant une étape de prélèvement de ladite fraction de MCP (2) séparée par un receveur.

## Patentansprüche

1. Vorrichtung zur Speicherung von Wärmeenergie, umfassend einen Behälter (1), mindestens ein zweiphasiges Fest/Flüssig-Phasenwechselmaterial (PCM) (2), das im Behälter (1) enthalten ist, und einen Wärmeträgerfluid-Wärmeenergietauscher, der mindestens ein Rohr (3) umfasst, in dem ein Wärmeträgerfluid zirkulieren kann, das dafür konfiguriert ist, dem PCM (2) Wärmeenergie zuzuführen und/oder von demselben rückzugewinnen, wobei das Rohr (3) mindestens teilweise in das PCM (2) eingetaucht ist, und umfassend einen Inertgas-Gaskopfraum (4), der einen Teil umfasst, welcher im Behälter (1) oberhalb des mindestens einen PCM (2) und in Kontakt mit demselben eingerichtet ist, **dadurch gekennzeichnet, dass** sie ein Trennmittel umfasst, das im Gaskopfraum (4) außerhalb eines maximalen Raumforderungsbereichs des PCM (2) in seiner am stärksten expandierten Phase der zwei Fest/Flüssig-Phasen eingerichtet ist, wobei das Trennmittel dafür konfiguriert ist, eine Fraktion des mindestens einen Fest/Flüssig-PCM (2), die bei den Phasenwechseln verdampft, aus dem Gaskopfraum (4) abzutrennen.

2. Vorrichtung nach dem vorstehenden Anspruch, wobei das Trennmittel einen Kondenser (8) umfasst.

3. Vorrichtung nach Anspruch 2, wobei der Kondenser (8) ausgewählt ist aus einer Vigreux-Kolonne oder einem Rohr, das mindestens teilweise durch den Gaskopfraum (4) verläuft und ein Kältefluid enthält.

4. Vorrichtung nach einem der Ansprüche 2 oder 3, wobei das Trennmittel einen Aufnehmer umfasst, der unter dem Kondenser (8) angeordnet ist, um die Fraktion des kondensierten Fest/Flüssig-PCM (2) zurückzugewinnen.

5. Vorrichtung nach einem der vorstehenden Ansprüche, die Mittel zum Spülen des Gaskopfraums (4) umfasst, welche mindestens eine Leitung zum Einlassen (5) von Spülgas in den Behälter (1), und mindestens eine Leitung zum Auslassen (6) von Spülgas aus dem Behälter (1) umfassen.

6. Vorrichtung nach einem der vorstehenden Ansprüche, die ein Mittel zum Entnehmen der Fraktion des vom Trennmittel abgetrennten Fest/Flüssig-PCM (2) umfasst.

7. Vorrichtung nach dem vorstehenden Anspruch in Kombination mit Anspruch 4, wobei das Entnahmemittel ausgewählt ist aus einem Entnahmeventil (12) oder einem Zugang zum Aufnehmer von der Außenseite des Behälters (1) her.

8. Vorrichtung nach einem der vorstehenden Ansprüche, die kein Flüssig/Gas-PCM (2) umfasst.

9. Vorrichtung nach einem der vorstehenden Ansprüche, wobei das Inertgas des Gaskopfraums (4) und/oder ein Spülgas ausgewählt ist aus mindestens einem aus Stickstoff, Helium, Kohlendioxid, Argon, Luft, und einer Mischung aus einem oder mehreren vorstehenden Gasen.

10. Verfahren zur Speicherung von Wärmeenergie in einer Vorrichtung nach einem der vorstehenden Ansprüche, das die folgenden Schritte umfasst:
- Phasenwechsel des PCM (2) zwischen der flüssigen und festen Phase,
- Verdampfen einer Fraktion von PCM (2) im Laufe der Phasenwechsel,
- Abtrennen der Fraktion von verdampftem PCM (2) aus dem Gas des Gaskopfraums (4) durch ein Trennmittel.

11. Verfahren nach dem vorstehenden Anspruch, wobei das Abtrennen der Fraktion von verdampftem PCM (2) aus dem Gas des Gaskopfraums (4) das Kondensieren der PCM (2) Fraktion durch einen Kondenser (8) umfasst.

12. Verfahren nach dem vorstehenden Anspruch, das einen Schritt des Kondensierens der Fraktion des verdampften Fest/Flüssig-PCM (2), das im Gaskopfraum (4) vorliegt, ohne Kondensieren des Gases des Gaskopfraums (4) mittels des Kondensators (8) umfasst.

13. Verfahren nach einem der drei vorstehenden Ansprüche, das einen Schritt des Abtrennens der Fraktion von vergastem Fest/Flüssig-PCM (2) mittels des Trennmittels aus dem Gas des Gaskopfraums (4) umfasst, bevor das Gas aus dem Gaskopfraum (4) in die Auslassleitung (6) getragen wird, wobei das Trennmittel im Bereich der Gasauslassleitung (6) eingerichtet ist.

14. Verfahren nach einem der vier vorstehenden Ansprüche, das einen Schritt des Entnehmens der abgetrennten PCM (2) Fraktion durch einen Aufnehmer umfasst.

## Claims

1. Device for storing thermal energy comprising a tank (1), at least one solid/liquid two-phase phase change material (PCM) (2) contained in the tank (1) and a heat-transfer fluid thermal energy exchanger comprising at least one tube (3), wherein a heat-transfer fluid configured to bring and/or recover the thermal energy to the PCM (2) is capable of circulating, the tube (3) being at least partially immersed in the PCM (2) and comprising an inert gas gaseous sky (4) comprising a portion arranged in the tank (1) above and in contact with at least one PCM (2), **characterised in that** it comprises a separation means arranged in the gaseous sky (4) outside of a maximum occupation zone of the PCM (2) in the more dilated phase thereof of the two solid/liquid phases, the separation means being configured to separate, from the gaseous sky (4), a fraction of the at least one solid/liquid PCM (2) being evaporated during the phase changes.

2. Device according to the preceding claim, wherein the separation means comprises a condenser (8).

3. Device according to claim 2, wherein the condenser (8) is selected from among a Vigreux column or a tube passing through at least partially the gaseous sky (4) and containing a refrigerating fluid.

4. Device according to any one of claims 2 or 3, wherein the separation means comprises a receiver arranged under the condenser (8) so as to recover the fraction of the condensed solid/liquid PCM (2).

5. Device according to any one of the preceding claims comprising means for purge the gaseous sky (4) comprising at least one purge gas inlet conduit (5) in the tank (1) and at least one purge gas outlet conduit (6) outside of the tank (1).

6. Device according to any one of the preceding claims comprising a means for sampling the fraction of the solid/liquid PCM (2) separated by the separation means.

7. Device according to the preceding claim combined with claim 4, wherein the sampling means is selected from among a sampling valve (12) or an access to the receiver from the outside of the tank (1).

8. Device according to any one of the preceding claims not comprising any liquid/gas PCM (2).

9. Device according to any one of the preceding claims, wherein the inert gas of the gaseous sky (4) and/or a purge gas is selected from among at least one of nitrogen, helium, carbon dioxide, argon, air, and a mixture of one or more of the preceding gases.

10. Method for storing thermal energy in a device according to any one of the preceding claims comprising the following steps:
- phase change of the PCM (2) between the liquid and solid phases
- evaporating a PCM (2) fraction during the phase changes
- separating the PCM (2) fraction evaporated from the gas of the gaseous sky (4) by a separation means.

11. Method according to the preceding claim, wherein the separation of the PCM (2) fraction evaporated from the gas of the gaseous sky (4) comprises the condensation of said PCM (2) fraction by a condenser (8).

12. Method according to the preceding claim comprising a step of condensing the fraction of the evaporated solid/liquid PCM (2) present in the gaseous sky (4) without condensing the gas from the gaseous sky (4), by way of the condenser (8).

13. Method according to any one of the three preceding claims comprising a step of separating the gas from the gaseous sky (4) of the solid/liquid PCM (2) fraction, carbonated before the gas from the gaseous sky (4) is removed in the outlet conduit (6) by way of the separation means, said separation means being arranged at the level of the gas outlet conduit (6).

14. Method according to any one of the four preceding claims comprising a step of sampling said PCM (2) fraction separated by a receiver.
